# EUROPÄISCHE PATENTSCHRIFT

(11) **EP 0 349 967 B1**
(45) Veröffentlichungstag und Bekanntmachung des Hinweises auf die Patenterteilung: **22.09.1993**
(21) Anmeldenummer: 89112143.6
(22) Anmeldetag: 03.07.1989
(51) Int. Cl.: H04L 12/28, H04L 12/26, G08B 29/00

(54) **Verfahren zur Datenübertragung zwischen verschiedenen Stationen**
Method for data transmission between different stations
Procédé de transmission de données entre différents stations

(30) Priorität: 06.07.1988 DE 3822893
(43) Veröffentlichungstag der Anmeldung: 10.01.1990
(73) Patentinhaber: SIEMENS AKTIENGESELLSCHAFT, 80333 München (DE)
(72) Erfinder: Schreyer, Karlheinz, D-8190 Wolfratshausen (DE)

(56) Entgegenhaltungen:
- HITACHI REVIEW, Band 31, Nr. 3, Juni 1982, Seiten 125-130; J. KASHIO et al.: "32 Mb/s optical fiber loop network: H-8644"
- 10TH CONFERENCE ON LOCAL COMPUTER NETWORKS, Minneapolis, Minnesota, 7.-9. Oktober 1985, Seiten 124-133, IEEE, New York, US; M.J. JOHNSON: "Reliability mechanisms of the FDDI high bandwidth token ring protocol"
- PROCEEDINGS 1986 INTERNATIONAL CARNAHAN CONFERENCE ON SECURITY TECHNOLOGY, ELECTRONIC CRIME COUNTERMEASURES, Gothenburg, 12.-14. August 1986, Seiten 57-58, IEEE, New York, US; R. VALLE ALARCON et al.: "Communication system approach to a security service"

## Beschreibung

Die Erfindung bezieht sich auf ein Verfahren zur Datenübertragung zwischen verschiedenen Stationen, einer Hauptstation und mehreren Unterstationen, in einem Sicherheits-Dialog-Netz, welches als Token-Ring ausgebildet ist, gemäß dem Oberbegriff des Patentanspruchs 1.

Es ist bekannt, zur Sicherung nichtmanipulierbarer Datenübertragung zwischen verschiedenen Teilnehmern eine kryptografische Datensicherung vorzunehmen. In Gefahrenmeldeanlagen, insbesondere Einbruchmeldeanlagen, muß die Leitung auf Unversehrtheit überwacht werden. Ein derartiges Daten übertragungs verfahren für eine Einbrechmeldeanlage wurde bereits vorgeschlagen (Patentanmeldung Nr. EP-A- 304 733, veröffentlicht 1.3.89. Das bekannte Verfahren arbeitet nach dem Prinzip des Token-Ringes. Das Token symbolisiert die Sendeberechtigung und wird von Station zu Station weitergegeben. Eine Hauptstation überwacht den Fluß des Tokens und speist ein neues ein, falls es verloren gegangen ist. Dabei werden regelmäßig in bestimmten Zeitabständen Token auf die Leitung gegeben.

Aus dem Bericht "Reliability Mechanisms of the FDDI High Bandwidth Token Ring Protocol", 10TH CONFERENCE ON LOCAL COMPUTER NETWORKS, Minneapolis, Minnesota, 7.-9.Oktober 1985, Seiten 124-133, IEEE, New York, US; M.J.JOHNSON) sind Zuverlässigkeitsmechanismen bei Tokenring-Leitungsnetzen beschrieben, speziell bei Fiberoptiken mit hoher Brandbreite. Zur Fehlererkennung wird das Netz selbsttätig dauernd überwacht, dabei weist jede Station einen Token-Rotation-Timer auf, der zur Fehlerentdeckung den Wert der erforderlichen Zeit für die Token für einen Netzumlauf überwacht.

Bedingt durch elektromagnetische Beeinflussungen können Zeichen zerstört werden. Deshalb meldet die Hauptstation erst nach einigen erfolglosen Versuchen eine Leitungsstörung. Je weniger erfolglose Versuche zu einer Meldung auf Leitungsstörung führen, so störempfindlicher ist die Anlage. Das bedeutet bei einer Gefahrenmeldeanlage, daß das System um so leichter zu Fehlalarmen führen kann.

Aufgabe der Erfindung ist es daher, die Störsicherheit, insbesondere wenn eine Vielzahl von Unterstationen über einen Ring an der Hauptstation angeschlossen sind, zu erhöhen und eine Verringerung der Fehlalarme zu erreichen.

Diese Aufgabe wird bei einem eingangs beschriebenen Datenübertragungsverfahren mit den kennzeichnenden Merkmalen des Anspruchs 1 gelöst.

Erfindungsgemäß werden nun von der Hauptstation in ununterbrochener Folge Token ausgesendet. Dadurch befindet sich ständig an jeder Stelle des Rings ein Zeichen auf der Leitung. Eine Leitungsstörung, wie Kurzschluß, Unterbrechung oder Manipulation, wird erst dann gemeldet, wenn während der vorgebbaren gesamten Störungserkennungszeit kein einziges Token mehr an der Hauptstation eintrifft. Das hat den Vorteil, daß beim Ausbleiben einzelner Token, bedingt durch eine kurzzeitige Störung, nicht sofort eine Meldung über eine Leitungsstörung erfolgt. Ein weiterer Vorteil ist noch dadurch gegeben, daß im Falle der Übertragung von Meldedaten seitens einer Unterstation zur Hauptstation zur Leitungsüberwachung diese Meldedaten herangezogen werden. Das bedeutet, wenn eine Unterstation einen Sendewunsch hat, so schickt sie ihr Nutztelegramm ab, nachdem sie ein Token empfangen hat. Da in der Regel ein Meldungstelegramm länger als ein Token ist, laufen während der Sendezeit dieser Unterstation bei ihr wohl mehrere Token ein, werden jedoch für die Zeit bzw. Länge des Telegramms nicht weitergegeben. Die Hauptstation nützt die Meldedaten für die Leitungsüberwachung aus und überprüft deren Empfang, wobei sie die eben fehlenden Token einfach ignorieren kann.

Um auch während der Übertragung von Nutzdaten d.h. während einer Telegrammübertragung, den Störabstand zu erhöhen, wird in einer Weiterbildung des erfindungsgemäßen Verfahrens die empfangene Information bei einem irreparablen Paritätsfehler nicht sofort wieder verworfen, sondern in einem dafür vorgesehenen Speicher gespeichert und wie üblich aber negativ quitiert. Sollten nun auch die Wiederhohlungen fehlerhaft sein, so werden sie ebenfalls im Speicher hinterlegt. Bevor nun die Hauptstation auf eine gestörte Leitung erkennt, wird in der Hauptstation aus den eingelaufenen und gespeicherten Telegrammen die ursprüngliche Information rekonstruiert. Dies kann beispielsweise durch einfache Mehrheitsentscheidung geschehen. Ist dies nicht der Fall, so wird erst nach diesem Rekonstruktionsversuch auf eine Leitungsstörung erkannt und eine Störungsmeldung abgegeben.

Das erfindungsgemäße Verfahren wird anhand der Zeichnung im folgenden erläutert. Dabei zeigen
- FIG: 1 ein Sicherheits-Dialog-Netz als Token-Ring,
- FIG 2 und 3: die Anzahl der einlaufenden Token nach dem bisherigen Verfahren,
- FIG 4 und 5: bei dem erfindungsgemäßen Verfahren und
- FIG 6 und 7: ein Diagramm mit Meldedaten seitens einer Unterstation.

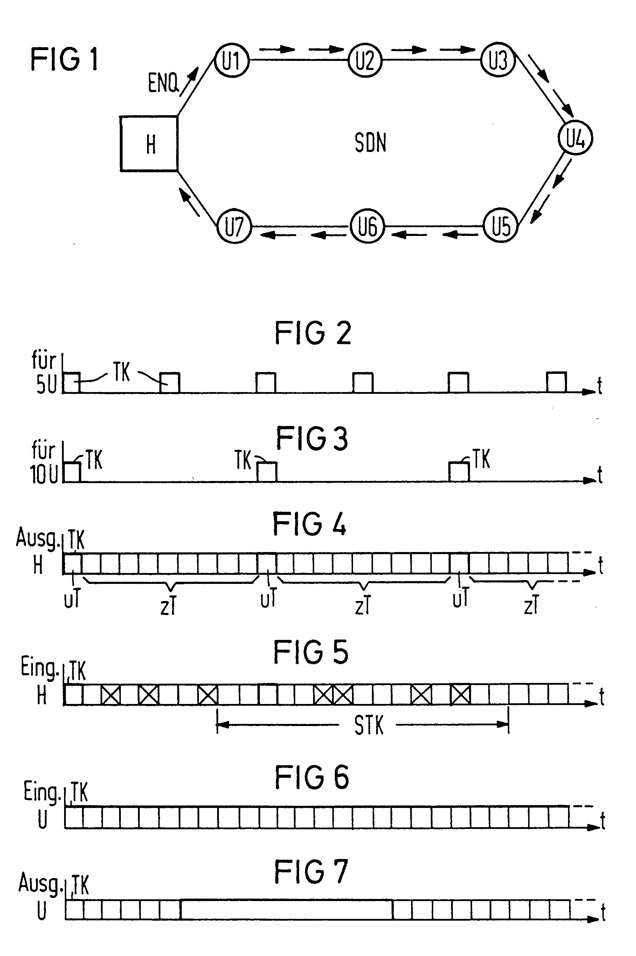

In FIG 1 ist für ein an sich bekanntes Verfahren ein Gefahren-Melde-Netzwerk als Token-Ring mit einer Hauptstation H und sieben Unterstationen U1 bis U7 dargestellt. Die Hauptstation H gibt die Token (TK) als Aufforderungssignal zum Senden ENQ auf die Leitung. Jede Unterstation empfängt das Token und gibt es, wenn es keine Meldung zum Absetzen hat, an die nächste Station weiter. Dabei überwacht die Hauptstation das Eintreffen des Tokens.

In der FIG 2 sind für die Zeit t die Anzahl der einlaufenden Token TK an der Hauptstation für beispielsweise fünf Unterstationen (5U) dargestellt. Darunter sind für denselben Zeitbereich die Anzahl der einlaufenden Token TK für zehn Unterstationen (10U) in FIG 3 dargestellt. Für eine maximal zulässige Störerkennungszeit, z.B. eine Sekunde, und bei einer gegebenen Datenübertragungsgeschwindigkeit legt man die Zahl der zum Alarm führenden Fehlversuche möglichst hoch. Wie aus FIG 2 und 3 deutlich ersichtlich, erkennt man, daß die Zahl der zum Alarm führenden Versuche um so kleiner wird, je mehr Unterstationen an einem Token-Ring angeschlossen sind.

In FIG 4 ist nun für die Zeit t eine ununterbrochene Folge von Token TK schematisch dargestellt. Dabei sind die ursprünglichen Token uT kräftiger markiert. Dazwischen befinden sich die zusätzlichen Token zT.

In FIG 5 ist die Anzahl der Token TK dargestellt, die bei der Hauptstation (Eing. H) eintreffen. Dabei sind diejenigen Token, die gestört sind oder nicht eintreffen, mit Kreuzen gekennzeichnet. Ebenso wie bei FIG 4 sind die ursprünglichen Token uT extra stark gekennzeichnet. Für eine vorgegebene Störungserkennungszeit STK, die ebenfalls in FIG 5 eingezeichnet ist, würde bei dem bisherigen Verfahren der Ausfall zweier (ursprünglicher) Token uT sofort zu einer Meldung über eine Leitungsstörung führen. Mit dem erfindungsgemäßen Verfahren wird jedoch beim Ausbleiben einer ganzen Reihe von Token noch keine Störungsmeldung erfolgen. Das Zeitdiagramm in FIG 5 zeigt dies deutlich. Erst wenn für die vorgegebene Störungserkennungszeit STK kein einziges Token an der Hauptstation eintrifft, wird eine Störungsmeldung abgegeben.

Im Zeitdiagramm nach FIG 6 sind die fortlaufenden Token am Eingang einer Unterstation (Eing. U) dargestellt. Hat diese Unterstation einen Sendewunsch, so schickt sie ihr Telegramm ab, nachdem sie ein Token empfangen hat. In der Regel ist ein Meldungstelegramm ME aber länger als ein Token TK. Deshalb laufen während der Sendezeit der Unterstation mehrere Token ein (FIG 6). In dieser Zeit setzt die Unterstation am Ausgang (Ausg. U) ihre Meldung ME ab. (FIG 7) Erst wenn das Meldetelegramm zu Ende ist, werden die fortlaufend empfangenen Token wieder weitergegeben. Erfindungsgemäß wird in der Hauptstation (H) die Meldung (ME) einer Unterstation (Un) zur Leitungsüberwachung herangezogen, so daß während des Empfangs der Meldungen die folgenden Token einfach ignoriert werden.

## Patentansprüche

1. Verfahren zur Datenübertragung zwischen verschiedenen Stationen, einer Hauptstation (H) und mehreren Unterstationen (U1 bis Un), in einem Sicherheits-Dialog-Netz (SDN), welches als Token-Ring ausgebildet ist, wobei mit den Token (TK), die von Station zu Station weitergegeben werden, die Übertragungsleitung auf Störungen überwacht wird und wobei Befehlsdaten an die Unterstationen und Meldedaten von den einzelnen Unterstationen an die Hauptstation übertragen werden,
**dadurch gekennzeichnet,**
daß die Hauptstation (H) in ununterbrochener Folge Token (TK) aussendet und dann wieder empfängt, daß eine Unterstation (U1 bis Un), die einen Sendewunsch hat, ihre Meldedaten (Nutztelegramm) abschickt, nachdem sie ein Token empfangen hat, und daß sie während der Sendezeit des Nutztelegramms einlaufende Token nicht weitergibt, daß die Hauptstation (H) eine Störung meldet, wenn während einer vorgegebenen Störungserkennungszeit (STK) kein einziges Token (TK) mehr ankommt, und daß bei der Übertragung von Meldedaten (Nutztelegramme) in der Hauptstation zur Leitungsüberwachung anstelle der Token (TK) die Meldedaten (ME) herangezogen werden.

2. Verfahren zur Datenübertragung nach Anspruch 1,
**dadurch gekennzeichnet,**
daß in der Hauptstation die empfangenen Meldedaten bei irreparablen Paritätsfehlern negativ quittiert aber gespeichert werden, daß mehrere wiederholt empfangene aber fehlerhafte Meldedaten gespeichert werden und daß die Hauptstation aus diesen Daten das ursprüngliche Nutztelegramm rekonstruiert und dann erst eine Leitungsstörung meldet, wenn die Rekonstruktion nicht möglich ist.

## Claims

1. Method for data transmission between different stations, one master station (H) and a plurality of substations (U1 to Un), in a security dialog network (SDN) designed as a token ring network, in which the transmission line is monitored for faults by means of the tokens (TK) passed from station to station, and in which command data is transmitted to the substations and message data is transmitted from the individual substations to the master station, characterised in that the master station (H) transmits tokens (TK) in uninterrupted series and then receives them again, in that a substation (U1 to Un) with a transmit request sends its message data (information telegram) after it has received a token, and in that it does not pass on incoming tokens during the transmission time of the information telegram, in that the master station (H) reports a fault if not a single token (TK) arrives during a predetermined fault detection time (STK), and in that, for the transmission of message data (information telegrams), the message data (ME) are used instead of the tokens (TK) for line monitoring in the master station.

2. Method for data transmission according to Claim 1, characterised in that in the case of unrecoverable parity errors, the message data received are negatively acknowledged but are stored in the master station, in that a plurality of message data that has been repeatedly received but is incorrect is stored, and in that the master station reconstructs the original information telegram from the said data and only reports a line fault if the reconstruction is not possible.

## Revendications

1. Procédé de transmission de données entre différents postes, un poste principal (H) et plusieurs postes auxiliaires ou sous-stations (U1 à Un), dans un réseau de dialogue à sécurité (SDN), qui est réalisé sous la forme d'un anneau à cheminement de signaux de contrôle caractéristiques, du type dans lequel la ligne de transmission est surveillée, concernant des perturbations, à l'aide des signaux de contrôle caractéristiques (TK) qui sont retransmis de poste à poste, et du type dans lequel des données d'instructions sont transmises aux postes auxiliaires et des données de signalisation sont transmises par chacun des postes auxiliaires au poste principal,
caractérisé en ce que le poste principal (H) émet une suite ininterrompue de signaux de contrôle caractéristiques (TK) et les reçoit en retour, qu'un poste auxiliaire (U1 à Un), qui souhaite émettre, envoie ses données de signalisation (télégramme utile), après avoir reçu un signal de contrôle caractéristique, qu'il ne retransmet pas de signal de contrôle caractéristique arrivant durant l'émission du télégramme utile, que le poste principal (H) signale une perturbation si aucun signal de contrôle caractéristique (TK) particulier n'arrive pendant un temps (STK) prédéterminé de reconnaissance de perturbation, et que, lors de la transmission des données de signalisation (télégramme utile) on fait appel, dans le poste principal pour la surveillance de la ligne, aux données de signalisation (ME) à la place des signaux de contrôle caractéristiques (TK).

2. Procédé de transmission suivant la revendication 1,
caractérisé en ce que, en cas de défauts de parité irréparables, les données de signalisation sont reçues dans le poste principal avec accusé de réception négatif, mais sont néanmoins mémorisées, que plusieurs données de signalisation reçues de façon répétitive mais inexactes sont mémorisées et que le poste principal reconstitue, à partir de ces données, le télégramme initial et ne signale une perturbation de ligne que si la constitution n'est pas possible.
